Europäisches Patentamt

European Patent Office

Office européen des brevets

(11) Veröffentlichungsnummer: **0 315 011**
**A1**

(12) # EUROPÄISCHE PATENTANMELDUNG

(21) Anmeldenummer: 88117677.0

(22) Anmeldetag: 24.10.88

(51) Int. Cl.⁴: **F22B 37/22 , F16L 55/10 , F16J 13/08**

(30) Priorität: 05.11.87 DE 3737609

(43) Veröffentlichungstag der Anmeldung:
**10.05.89 Patentblatt 89/19**

(84) Benannte Vertragsstaaten:
**BE CH DE ES FR IT LI SE**

(71) Anmelder: **Siemens Aktiengesellschaft Berlin
und München**
**Wittelsbacherplatz 2**
**D-8000 München 2(DE)**

(72) Erfinder: **Hümmeler, Alexander, Dipl.-Ing.**
**Kaibachweg 7**
**D-8551 Röttenbach(DE)**
Erfinder: **Kätscher, Erich**
**Rosenbacher Strasse 34**
**D-8525 Marloffstein(DE)**
Erfinder: **Stauner, Jakob**
**Schlossgartenstrasse 4**
**D-8500 Nürnberg 90(DE)**

(54) **Abdichtvorrichtung für in einen Behälter, insbesondere Dampferzeuger, mündende Rohrstutzen.**

(57) Zur wassertechnischen Trennung eines Reaktordruckbehälters und Dampferzeugers ist an der Mündung des Rohrstutzens (2) in den Dampferzeuger ein Haltering (4) mit Flansch (5) angeordnet und dicht mit der Behälterwandung (6) des Dampferzeugers verbunden. An dem Flansch (5) ist unter Zwischenlage einer Dichtung (9) eine die Öffnung des Rohrstutzens (2) verschließende starre Scheibe (3) mittels Schnellspanngliedern (10) befestigt, welche durch Schlitze (3s) in der starren Scheibe (3) und im Haltering (4) hindurchgreifen, an der Scheibe (3) abgestützt und am Haltering (4) verriegelt und verspannt sind.

FIG 1

## Abdichtvorrichtung für in einen Behälter, insbesondere Dampferzeuger, mündende Rohrstutzen

Die Erfindung bezieht sich auf eine Abdichtvorrichtung, die zum Verschließen eines in einen Behälter, insbesondere Dampferzeuger, mündenden Rohrstutzens anwendbar ist.

Aus der EP-A-0 014 878 ist eine Abdichteinrichtung bekannt, die aus einem scheibenförmigen starren Körper gebildet ist, der an seinem Umfang radial verschiebbare Riegel besitzt, die nach dem Einbringen der Dichteinrichtung in einen Rohrstutzen in Aussparungen am Stutzeninnenumfang zum Eingriff gebracht werden und die Abdichteinrichtung in einer vorgegebenen Position verriegeln. Die Abdichteinrichtung ist an der Seite, an der flüssiges Medium ansteht, mit einer dichtenden Gummihaut überzogen, welche am Außenumfang des scheibenförmigen Einsatzes in einen durch ein Druckmittel aufblasbaren Dichtungsring übergeht, der über Leitungen an einen Druckmittelspeicher angeschlossen ist. Zur Erzielung einer sicheren Abdichtung können auch zwei oder mehr scheibenförmige Einsätze in der Rohrleitung bzw. im Rohrstutzen durch Riegel verankert werden. Der scheibenförmige Einsatz wird aus einzelnen Abschnitten zusammengesetzt, die an den aneinander angrenzenden Bereichen Befestigungsrippen aufweisen, in denen Öffnungen für Steckbolzen oder Schraubenbolzen vorgesehen sind. Diese bekannte Dichteinrichtung erfordert zu ihrer Montage und Demontage einen relativ hohen Aufwand, da der Zusammenbau der einzelnen Abschnitte im Dampferzeuger schwierig ist und Leitungen zum Druckspeicher nach außen geführt werden müssen. Darüber hinaus kann die bekannte AUsführung nur von einer Seite mit Druck beaufschlagt werden. Ferner sind unter Druck stehende Dichtungsringe sehr störanfällig. Sie werden bei längerer Beanspruchung porös und können platzen. Schon eine sehr kleine Undichtheit im Dichtungsring verhindert eine ausreichende Abdichtung am Rohrstutzen und macht die Abdichteinrichtung unbrauchbar.

Der Erfindung liegt die Aufgabe zugrunde, eine sichere Abdichtvorrichtung anzugeben, die ohne Werkzeuge bzw. Hilfsvorrichtungen montiert werden kann und bei der keine Versorgungsleitungen nach außen verlegt zu werden brauchen. Darüber hinaus soll die Montage- bzw. Demontagezeit verkürzt werden und die Abdichtvorrichtung hohen Drücken standhalten.

Diese Aufgabe wird erfindungsgemäß durch eine Abdichtvorrichtung für in einen Behälter, insbesondere Dampferzeuger, mündende Rohrstutzen gelöst, bei der an der Mündung des Rohrstutzens ein Haltering mit Flansch angeordnet und dicht mit der Behälterwandung verbunden ist, wobei an dem Flansch unter Zwischenlage einer Dichtung eine die Öffnung des Rohrstutzens verschließende starre Scheibe mittels Schnellspanngliedern befestigt ist, welche durch Schlitze in der starren Scheibe und im Haltering hindurchgreifen, an der Scheibe abgestützt und am Haltering verriegelt und verspannt sind.

Auf diese Weise wird die erforderliche Dicht- bzw. Anpreßkraft nur mittels Schnellspannelementen aufgebracht, die von Hand betätigt werden können, so daß die Dichteinrichtung auch von ungelerntem Personal in kurzer Zeit montiert und nach Ausführung von Prüfarbeiten wieder demontiert werden kann.

Es ist vorteilhaft, wenn die Schnellspannvorrichtung einen Stützkörper aufweist, in dem ein Bolzen geführt ist, an dessen einem Ende in einem Gelenk ein Kniehebel gelagert ist, der über einen in einem Gelenk des Kniehebels gelagerten Lenker mit einem Drehpunkt am Stützkörper verbunden ist, wobei das andere Ende des Bolzens einen Hammerkopf trägt, der durch einen Befestigungsschlitz in der Scheibe und durch einen deckungsgleich ausgebildeten Schlitz in dem Flansch des Ringes hindurchführbar, durch eine Drehung verriegelbar und durch Betätigen des Kniehebels verspannbar ist. Durch diese Ausbildung wird vermieden, daß Spannelemente in den Halteelementen fressen.

Nach einer vorteilhaften Ausgestaltung der Erfindung ist die starre Scheibe durch zwei Scheibenhälften gebildet, von denen die rohrstutzenseitige Scheibenhälfte in eine Hohlkehle des Halterings eingelegt ist, die Dichtung zumindest den Spalt zwischen der rohrstutzenseitigen Scheibenhälfte und dem Flansch überdeckt und nur die behälterseitige Scheibenhälfte mit dem an dem Haltering angeordneten Flansch mittels eines Schnellspanngliedes verspannt ist. Diese Ausbildung erlaubt eine einfache Unterteilung der Scheibenhälften für den Fall, daß die in dem Behälter führenden Stutzen größer sind als die Mannlochstutzen, durch die die Abdichtvorrichtung eingeführt wird, ohne daß die einzelnen Abschnitte der Scheibe bzw. Scheibenhälften gegenseitig besonders verschraubt werden müssen.

Um zu erreichen, daß Druck von beiden Seiten der Abdichtvorrichtung anstehen kann, sind an der Außenseite beider Scheibehälften Versteifungsrippen angeordnet.

Ausführungsbeispiele der Erfindung sind in der Zeichnung dargestellt. Darin zeigen:

FIG 1 einen Schnitt durch eine Abdichtvorrichtung mit zwei Scheibenhälften,

FIG 2 eine Ansicht einer Abdichtvorrichtung mit unterteilten Scheibenhälften,

FIG 3 eine Abdichtvorrichtung mit einer ungeteilten Scheibe mit Schnellspannvorrichtung

FIG 4 die Schnellspannvorrichtung in geöffneter Stellung und

FIG 5 eine Ansicht einer weiteren Abdichtvorrichtung.

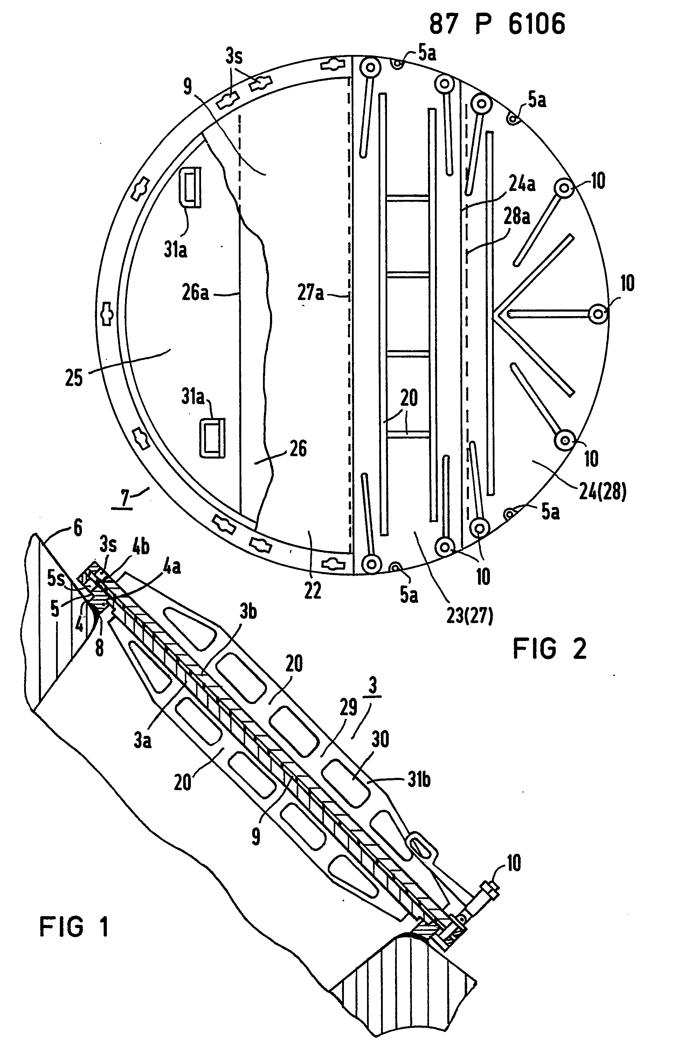

In FIG 1 ist mit 1 ein Kalotten-Wandteil eines als Dampferzeuger ausgebildeten Behälters 7 bezeichnet, in den das Ende eines eines Rohrstutzens 2 mündet, der über eine Rohrleitung und eine Kühlmittelpumpe an einen Reaktordruckbehälter angeschlossen wird, von dem ein Primärmedium zum Dampferzeuger strömt und wieder zum Reaktordruckbehälter zurückgeführt wird. Bei einer wiederkehrenden Prüfung des Reaktordruckbehälters und der Primärkreisläufe wird der Reaktor stillgesetzt und der Wasserspiegel im Reaktordruckbehälter bis etwa Mitte Loop-Stutzen abgesenkt, wodurch die Dampferzeuger-Kalotten entleert werden.

Von einer Bedienungsperson, welche durch ein nicht dargestelltes Mannloch in die trockene Dampferzeuger-Kalotte steigt, wird an der Mündung des Rohrstutzens 2 eine erfindungsgemäße Abdichtvorrichtung 3 abgebracht. Dann wird der Reaktordruckbehälter wieder geflutet (Strahlenabschirmung) und es können Arbeiten am gefluteten Reaktordruckbehälter und in den trockenen Dampferzeugern parallel ausgeführt werden. Dies bedeutet neben der Reduzierung der Strahlenbelastung für das Personal eine Verkürzung der gesamten Revisionszeit.

An der Mündung des Rohrstutzens 2 in dem Dampferzeuger ist ein Haltering 4 mit Flansch 5 angeordnet und dicht mit der Wandung 6 des Dampferzeugers verbunden. Es ist günstig, den Haltering 4 durch eine rundum geschlossene, wasserdichte Schweißnaht 8 an der Wandung 6 anzubringen.

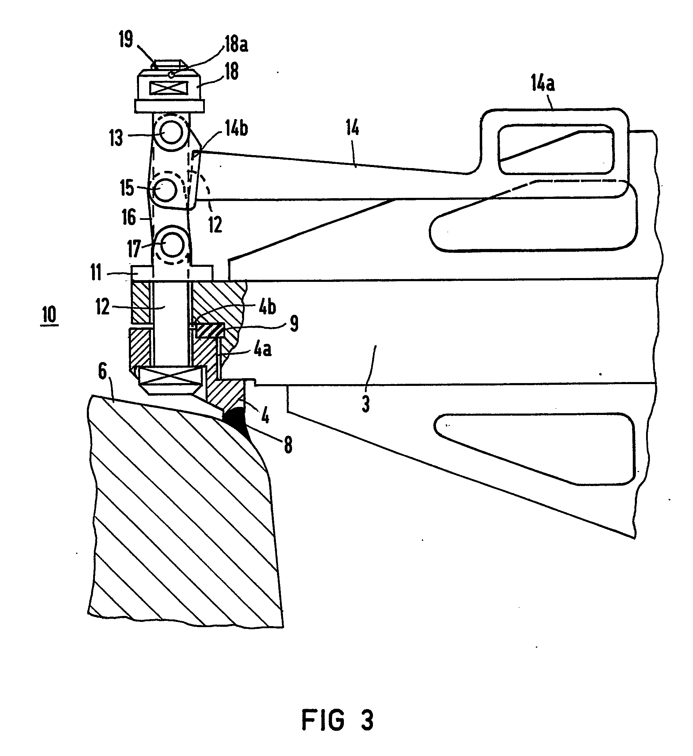

An dem Flansch 5 ist unter Zwischenlage einer Dichtung 9 eine starre Scheibe 3 mittels Schnellspanngliedern 10 befestigt (siehe auch FIG 3). Am Rand der starren Scheibe 3 sind Schlitze 3s vorgesehen (FIG 2), deren Achsen parallel zur Achse der starren Scheibe 3 liegen. Diese Schlitze 3s sind in der Mitte kreisförmig ausgebuchtet. Wie FIG 1 zeigt, hat der Flansch 5 ebenfalls Schlitze 5s, die deckungsgleich mit den Schlitzen 3s ausgebildet und angeordnet sind. Die Schnellspannglieder 10 greifen durch die Schlitze 3s in der Scheibe 3 und die Schlitze 5s in dem Flansch 5 des Halteringes 4 hindurch und sind an diesem arretierbar.

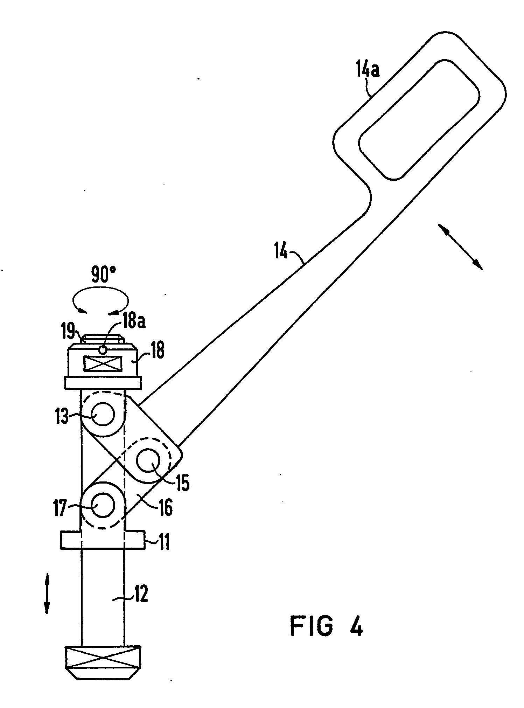

Aus FIG 3, 4 ist zu ersehen, daß das Schnellspannglied 10 einen Stützkörper 11 aufweist, in dem ein Bolzen 12 axial verschiebbar geführt ist. Dieser Bolzen 12 ist an seinem einen Ende mit einem Gewinde 19 und einer Mutter 19 versehen, an der ein Gelenk 13 angeordnet ist. In diesem Gelenk 13 ist ein Kniehebel 14 gelagert. In einem Gelenk 15 des Kniehebels 14 ist das Ende eines Lenkers 16 gelagert, dessen anderes Ende in einem Drehpunkt 17 am Stützkörper 11 gelagert ist und auf diese Weise den Kniehebel 14 mit dem Stützkörper 11 verbindet. Das andere Ende des Bolzens 12 trägt einen Hammerkopf 20, der zum Festspannen der Scheibe 3 durch die Schlitze 3s, 5s in der entspannten Lage des Kniehebels 14 hindurchgeführt wird. Der Stützkörper 11 besteht aus einer Hülse mit Ring. Durch eine Drehung um 90° wird das Schnellspannglied 10 verriegelt. Drückt man den in FIG 4 gezeigten Kniehebel nach unten, so wird der Bolzen mit dem Hammerkopf nach oben bewegt, wobei sich der Stützkörper 11 an der Scheibe 3 abstützt, und die Scheibe gegen den Haltering 4 verspannt (FIG 3).

Zweckmäßigerweise wird zu beiden Seiten des Bolzens ein Lenker 16 vorgesehen und der Kniehebel 14 ist gegabelt ausgebildet. Dadurch erhält man eine größere mechanische Stabilität. Es ist günstig, an der Hebelanordnung einen Anschlag 14b derart anzuordnen, daß beim nach unten Drücken des Hebels 14 das Gelenk 15 etwas über die gemeinsme Ebene der Gelenke 13 und 17 hinaus bewegt wird. Dadurch wird eine selbstsperrende Wirkung der Hebelanordnung erzielt.

Durch Drehen des Bolzens 12 gegenüber der Mutter 18 kann die Spannkraft eingestellt werden. Nach der Einstellung wird die Mutter 18 durch einen Splint 18a gesichert.

Besonders vorteilhaft ist es, den Dichtkörper 3 durch zwei Scheibenhälften 3a, 3b zu bilden (FIG 1). Der Haltering 4 besitzt eine Hohlkehle 4a, in welche die rohrstutzenseitige Scheibenhälfte 3a eingelegt ist.

Zur Abdeckung des Spaltes zwischen der rohrstutzenseitigen Scheibenhälfte 3a und dem Flansch 5 ist eine Dichtung 9 vorgesehen, die als Gummiring oder Gummischeibe ausgebildet ist und zumindest den Spalt überdeckt. Es ist günstig, in dem Ring 4 eine ringförmige Vertiefung 4b zum Zentrieren der Dichtung 9 vorzusehen. Nach dem Einlegen der Dichtung 9 wird die mit den Schlitzen 3s versehene behälterseitige Scheibenhälfte 3b auf die Dichtung 9 aufgelegt. Um einen genauen Sitz der behälterseitigen Scheibenhälfte 3b zu erzielen, ist es zweckmäßig, Zentrierstifte 5a an dem Flansch 5 oder an der behälterseitigen Scheibenhälfte 3b anzuordnen. Nach dem Einführen der Schnellspannglieder 10 in die Schlitze 3s und 5s werden die beiden Scheibenhälften 3a, 3b mittels des Kniehebels 14 von Hand verspannt.

Aus Gewichtsgründen oder dann, wenn die Rohrstutzen größer sind als der Mannlochstutzen, ist es günstig, die gegebenenfalls mit Rippen 29 versehenen Scheibenhälften 3a, 3b in zwei oder mehr Abschnitte 21, 22, 23, 24 bzw. 25, 26, 27, 28 zu unterteilen und die Dichtung 9 als Scheibendichtung auszubilden (FIG 2). Dadurch wird die Handhabung der Abdichtvorrichtung durch eine Bedienungsperson wesentlich erleichtert.

Um die mechanische Beanspruchung der Dichtung 9 herabzusetzen, sind die Trennfugen 24a der Abschnitte 21 bis 24 der behälterseitigen Scheibenhälfte 3b gegenüber den Trennfugen 26a bis 28a der Abschnitte 25 bis 28 der rohrstutzenseitigen Scheibenhälfte 3a versetzt.

Zweckmäßigerweise besitzt jedes aus einem Abschnitt 25 bis 28 gebildete Scheibenelement einen oder mehrere versenkbare Traggriffe 31. In vorteilhafter Weise sind Traggriffe 31 für die Scheiben-Abschnitte 21 bis 24 dadurch gebildet, daß die Rippen 29 mit entsprechenden Aussparungen 30 versehen sind (FIG 1).

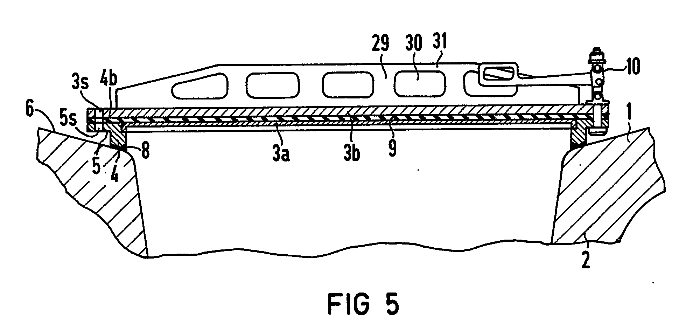

Für den Fall, daß die Scheibe 3 in Abschnitte unterteilt wird und Druck nur von der Rohrstutzenseite ansteht, ist es vorteilhaft, die rohrstutzenseitige Scheibenhälfte 3a als Halteblech für die als Dichtung 9 dienende Gummischeibe auszubilden (FIG 5).

Die Einzelteile der Abdichtvorrichtung sind so dimensioniert, daß sie von einer Person in dem Behälter bzw. der Dampferzeuger-Kalotte gehandhabt werden können. Alle erforderlichen Bauteile werden von einem Hilfspersonal einzeln durch das Mannloch in die Dampferzeuger-Kalotte gereicht.

Nach dem Anbringen der Dichtvorrichtung wird der Reaktordruckbehälter zur Erzielung einer strahlenabschirmenden Wirkung während der Arbeiten am Reaktordruckbehälter wieder geflutet und es können nunmehr am Reaktordruckbehälter und in den Dampferzeugern die erforderlichen Arbeiten parallel durchgeführt werden. Dies bedeutet neben der Reduzierung der Strahlenbelastung für das Betriebspersonal eine erhebliche Verkürzung der Revisionszeit. Unter Verwendung der erfindungsgemäßen Abdichtvorrichtung wird eine Montage bzw. Demontage der Abdichtvorrichtung in sehr kurzer Zeit mit kleinen Personaleinsatz ermöglicht.

**Ansprüche**

1. Abdichtvorrichtung für in einen Behälter (7), insbesondere Dampferzeuger, mündende Rohrstutzen (2), bei der an der Mündung des Rohrstutzens (2) ein Haltering (4) mit Flansch (5) angeordnet und dicht mit der Behälterwandung (6) verbunden ist, wobei an dem Flansch (5) unter Zwischenlage einer Dichtung (9) eine die Öffnung des Rohrstutzens (2) verschließende starre Scheibe (3) mittels Schnellspanngliedern (10) befestigt ist, welche durch Schlitze (3s) in der starren Scheibe (3) und im Haltering (4) hindurchgreifen, an der Scheibe (3) abgestützt und am Haltering (4) verriegelt und verspannt sind.

2. Abdichtvorrichtung nach Anspruch 1, bei der die Schlitze (3s) in der Scheibe (3) und im Flansch (5) des Halterings (4) axial angeordnet sind.

3. Abdichtvorrichtung nach Anspruch 1 oder 2, bei der das Schnellspannglied (10) einen Stützkörper (11) aufweist, in dem ein Bolzen (12) geführt ist, an dessen einem Ende in einem Gelenk (13) ein Kniehebel (14) gelagert ist, der über einen in einem Gelenk (15) des Kniehebels (14) gelagerten Lenker (16) mit einem Drehpunkt (17) am Stützkörper (11) verbunden ist, wobei das andere Ende des Bolzens (12) einen Hammerkopf (20) trägt, der durch einen Befestigungsschlitz (3s) in der Scheibe (3) und durch einen deckungsgleich ausgebildeten Schlitz (5s) in dem Flansch (5) des Halteringes (4) hindurchführbar, durch eine Drehung verriegelbar und durch Betätigen des Kniehebels (14) verspannbar ist.

4. Abdichtvorrichtung nach Anspruch 3, bei der an der Hebelanordnung ein Anschlag (14b) derart angeordnet ist, daß beim nach unten Drücken des Hebels (14) das Gelenk (15) etwas über die gemeinsame Ebene der Gelenke (13 und 17) hinaus bewegt und dadurch eine selbstsperrende Wirkung der Hebelanordnung erzielt wird.

5. Abdichtvorrichtung nach einem der vorhergehenden Ansprüche, bei der die starre Scheibe (3) durch zwei Scheibenhälften (3a, 3b) gebildet ist, von denen die rohrstutzenseitige Scheibenhälfte (3a) in eine Hohlkehle (4a) des Halterings (4) eingelegt ist, die Dichtung (9) zumindest den Spalt zwischen der rohrstutzenseitigen Scheibenhälfte (3a) und dem Flansch (5) überdeckt und nur die behälterseitige Scheibenhälfte (3b) mit dem an dem Haltering (4) angeordneten Flansch (5) mittels der Schnellspannglieder (10) verspannt ist.

6. Abdichtvorrichtung nach einem der vorhergehenden Ansprüche, bei der in dem Haltering (4) eine ringförmige Vertiefung zum Zentrieren der Dichtung (9) vorgesehen ist.

7. Abdichtvorrichtung nach einem der vorhergehenden Ansprüche, bei der an der Behälterseite der Scheibenhälfte (3a) versenkbare Traggriffe (31a) und an der Behälterseite der Scheibenhälfte (3b) Versteifungsrippen (29) mit Aussparungen (30) zur Bildung von Traggriffen (31b) angeordnet sind.

8. Abdichtvorrichtung nach Anspruch 5 oder einem der folgenden, bei der die beiden Scheibenhälften (3a, 3b) in zwei oder mehr Abschnitte (21 bis 24) unterteilt sind und die Dichtung (9) als Scheibendichtung ausgebildet ist.

9. Abdichtvorrichtung nach Anspruch 8, bei der die rohrstutzenseitige Scheibenhälfte (3a) als Halteblech für die als Dichtung (9) dienende Gummischeibe ausgebildet ist.

10. Abdichtvorrichtung nach Anspruch 8, bei der die Trennfugen (24a) der Abschnitte (21 bis 24) der behälterseitigen Scheibenhälfte (3b) gegenüber den Trennfugen (26a bis 28a) der Abschnitte (25 bis 28) der rohrstutzenseitigen Scheibenhälfte (3a) versetzt sind.

11. Abdichtvorrichtung nach Anspruch 3, bei der zum Einstellen der Spannkraft des Schnellspannglieder (10) das am Ende des Bolzens (12) angeordnete Gelenk (13) des Kniehebels (14) an einer Mutter (18) angebracht ist, in die das mit einem Gewinde (19) versehene Ende des Bolzens (12) eingeschraubt ist.

87 P 6106

FIG 2

FIG 1

87 P 6106

FIG 3

87 P 6106

14a

14

90°

19 18a

18

13

15

16

17

11

12

FIG 4

87 P 6106

FIG 5

Europäisches
Patentamt

**EUROPÄISCHER RECHERCHENBERICHT**

Nummer der Anmeldung

EP 88 11 7677

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 141 738 (FRAMATOME) <br> * Zusammenfassung; Figuren * <br> --- | 1 | F 22 B 37/22 <br> F 16 L 55/10 <br> F 16 J 13/08 |
| A | US-A-4 656 714 (EVANS) <br> * Zusammenfassung; Figuren * <br> --- | 1 | |
| A | FR-A-2 574 975 (THOME) <br> * Zusammenfassung; Figuren * <br> --- | 1 | |
| A | DE-C- 483 957 <br> (MANNESMANNRÖHREN-WERKE) <br> * Insgesamt * <br> --- | 1 | |
| A | DE-A-2 113 641 (BLIEBERGER) <br> --- | | |
| A | DE-A-3 116 961 (MEWA) <br> ----- | | |

**RECHERCHIERTE SACHGEBIETE (Int. Cl.4)**

F 22 B
F 16 J
F 16 L
G 21 C

Der vorliegende Recherchenbericht wurde für alle Patentansprüche erstellt

| Recherchenort | Abschlußdatum der Recherche | Prüfer |
|---|---|---|
| DEN HAAG | 28-12-1988 | VAN GHEEL J.U.M. |